# EUROPÄISCHE PATENTANMELDUNG

(11) **EP 2 395 257 A2**
(43) Veröffentlichungstag der Anmeldung: **14.12.2011**
(21) Anmeldenummer: 11168214.2
(22) Anmeldetag: 31.05.2011
(51) Int. Cl.: F16F 1/06, F16F 1/04

(54) **Maschinenelement bestehend aus Drahtwindungen**

(30) Priorität: 08.06.2010 CH 9112010
(71) Anmelder: Baumann Federn AG, 8630 Rüti (CH)
(72) Erfinder: Hohl, Andreas, 8630 Rüti (CH); Naumann, Beat, 8734 Ermenswil (CH)
(74) Vertreter: Troesch Scheidegger Werner AG

(57) **Zusammenfassung**

Ein Maschinenelement (1), aufweisend in einer zylindrischen Form verlaufende Drahtwindungen (3) zeichnet sich dadurch aus, dass diese Windungen im Wesentlichen zwischen zwei Mantelflächen (11,13) verlaufend ausgebildet sind. Die Windungen bestehen aus einem Profildraht, wobei die Windungen (3) zu einer zylindrischen Form gewickelt sind, welche sich im Wesentlichen zwischen zwei voneinander in radialer Richtung beabstandeten Mantelflächen (11,13) erstrecken.

## Beschreibung

Die vorliegende Erfindung betrifft ein Maschinenelement gemäss dem Oberbegriff nach Anspruch 1 sowie diverse Verwendungen des Maschinenelementes.

In der Technik sind viele Maschinenelemente bekannt, welche zwei Maschinenteile mehr oder weniger elastisch miteinander verbinden und entweder eine fixe oder eine lösbare Verbindung darstellen. Dabei können zwei Wellen, zwei Hülsen oder eine Hülse und eine Welle miteinander verbunden werden. Häufig sind nur kleine Verbindungskräfte notwendig, sodass ein einfaches Verbindungselement genügt.

Die Aufgabe der vorliegenden Erfindung liegt darin, ein Verbindungselement bzw. ein einfaches Maschinenelement der oben beschriebenen Art vorzuschlagen, welches kostengünstig in der Herstellung ist, einfach und kostengünstige Montage ermöglicht, grosse zulässige Relativbewegungen der beiden zu verbindenden Maschinenteile ermöglicht sowie die Übertragung von mechanischen Kräften und gegebenenfalls elektronischen Strömen.

Vorgeschlagen wird ein Maschinenelement gemäss dem Wortlaut nach Anspruch 1.

Das erfindungsgemässe Maschinenelement weist in einer zylindrischen Form verlaufende Drahtwindungen auf, welche im Wesentlichen zwischen zwei Mantelflächen verlaufend ausgebildet sind.

Die Windungen bestehen aus einem Profildraht, welcher zu einer zylindrischen Form gewickelt ist, wobei sich die Windungen im Wesentlichen zwischen zwei, in radialer Richtung voneinander beabstandeten Mantelflächen erstrecken.

Das Maschinenelement bestehend aus Drahtwindungen ist derart zu einer zylindrischen Form geformt, dass die Differenz zwischen dem Durchmesser der äusseren Mantelfläche und demjenigen der inneren Mantelfläche grösser ist als die doppelte radiale Ausdehnung des Drahtquerschnittes bzw. des Drahtprofils.

Gemäss einer Ausführungsvariante kommt der Draht der Windungen abwechslungsweise auf der äusseren und inneren Mantelfläche zu liegen, wobei er nie die äussere und innere Mantelfläche gleichzeitig berührt.

Vorgeschlagen wird, dass der Draht bzw. die Windungen derart geformt sind, dass der Draht jeweils nur für einen kurzen Abschnitt auf die äussere oder die innere Mantelfläche zu liegen kommt, wie beispielsweise < als ½ / bzw. < ¼ eines Windungsumfangs und zwischen dem Abschnitt auf der äusseren und der inneren Mantelfläche liegt der Draht weder auf der äusseren noch der inneren Mantelfläche auf.

Gemäss einer Ausführungsvariante sind die Windungen in axialer Richtung derart aufeinander ausgerichtet, dass sie einander kongruent überdeckend ausgebildet sind.

Die Windungen können aber auch in axialer Richtung gegeneinander verdreht ausgebildet sein, wie beispielsweise spiralförmig gegeneinander verdreht.

Die Windungen können dreieckförmig, viereckförmig oder mehreckförmig ausgebildet sein, wobei die jeweiligen Abschnitte in der äusseren und/oder inneren Mantelfläche eckig oder abgerundet ausgebildet sein können.

Weitere bevorzugte Ausführungsvarianten des erfindungsgemässen Maschinenelementes sind in den abhängigen Ansprüchen charakterisiert oder werden anschliessend unter Bezug auf die beigefügten Figuren näher erläutert.

Der Draht für das Maschinenelement kann aus einem beliebigen Material sein, wie insbesondere, aber nicht ausschliesslich, aus Eisen, Stahl, Kupfer, Kupferlegierungen, Aluminium, aus einem polymeren Werkstoff wie insbesondere einem verstärkten polymeren Werkstoff oder jedem anderen zum Draht verarbeiteten Material. Das Profil des Drahtes kann beliebig sein, sei es rund, oval, elliptisch, kantig mit beliebiger Anzahl Kanten wie insbesondere 3-,4-,5-,6-kantig oder ein Vielfaches davon. Die Kanten können scharfkantig oder mit einem Radius versehen sein.

Das Maschinenelement wird aus einem Profildraht zu einer zylinderförmigen Form gewickelt, dergestalt, dass das Element in regelmässiger oder unregelmässiger Folge Berührungspunkte bildet, welche auf der oben erwähnten äussern oder inneren Mantelfläche liegen, wobei der Draht pro Windung mindestens einmal oder auch eine Mehrzahl die äussere oder innere Mantelfläche berührt. Das besondere daran ist, dass die Durchmesserdifferenz der beiden Mantelfläche mehr als die doppelte radiale Ausdehnung des Drahtes beträgt und somit der Draht an einer Stelle nicht gleichzeitig die äussere und innere Mantelfläche berührt und immer einen Spalt offen lässt.

Das erfindungsgemäss vorgeschlagene Maschinenelement ist aufgrund seiner besonderen Form und Ausgestaltung für verschiedene Anwendungen einsetzbar wie:
1. als Verbindungselement zwischen einer Achse und einer Bohrung oder zwischen zwei Achsen oder zwischen zwei Bohrungen,
2. als Zentrierelement zwischen einer Achse und einer Bohrung,
3. als Toleranzhülse zwischen einer Achse und einer Bohrung,
4. als Dämpfungselement zwischen einer Achse und einer Bohrung oder zwischen zwei Achsen oder zwischen zwei Bohrungen,
5. als elektrische Verbindungselement zwischen einer Achse und einer Bohrung oder zwischen zwei Achsen.

Die Verbindung kann sowohl fest als auch lösbar sein.

Selbstverständlich sind auch andere Anwendungen denkbar.

Im Falle der Verwendung als Maschinenelement zwischen einer Bohrung und einer Achse ist es gemäss einer weiteren Ausführungsvariante möglich, dass einzelne Abschnitte bzw. Windungen aus der äusseren oder inneren Mantelfläche hervorstehen können, sodass diese in entsprechende Einkerbungen der Bohrung oder der Achse einrasten können. Die Erfindung wird nun beispielsweise und unter Bezug auf die beigefügten Figuren näher erläutert.

Dabei zeigen:
Figuren 1 und 2 schematisch im Längsschnitt und im Querschnitt ein erfindungsgemässes Maschinenelement,
Figur 3 schematisch im Längsschnitt die Verwendung eines Maschinenelementes zum Verbinden zweier Achsen,
Figur 4 schematisch das Verbinden einer Achse in einer Bohrung,
Figuren 5a-5h schematisch in Perspektive Beispiele von Drahtprofilen für ein erfindungsgemässes Maschinenelement, und
Figuren 6-11 in Perspektive mögliche Ausführungsvarianten eines erfindungsgemässen Maschinenelementes.

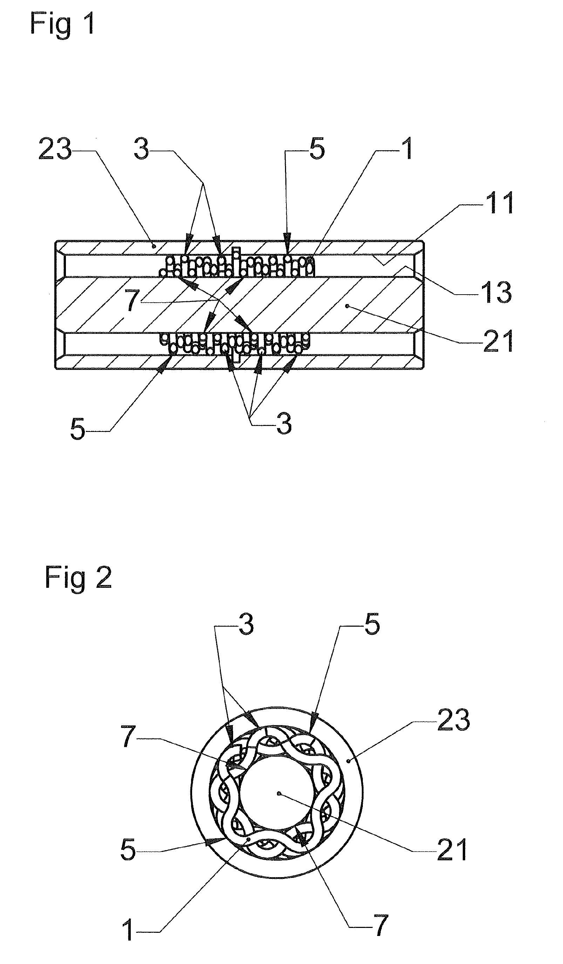

Anhand eines Beispieles, dargestellt in den Figuren 1 und 2, soll das erfindungsgemässe Maschinenelement näher erläutert werden. Dabei zeigt Figur 1 schematisch im Längsschnitt ein erfindungsgemässes Maschinenelement ausgebildet als Kontaktfederkörper zwischen einer Aussenhülse und einem Kernteil.

Das erfindungsgemässe Maschinenelement 1 weist einzelne Windungen 3 auf, welche sich um das Kernteil 21 herum erstrecken. Dabei stossen die einzelnen Windungen 3 teilweise an das äussere Hülsenteil 23 bzw. bilden diese Berührungspunkte 5 des Drahtes die äussere Mantelfläche 11. Analog bzw. alternierend berühren die einzelnen Windungen 3 das innere Kernteil 21 in den Berührungspunkten 7 und bilden damit die innere Mantelfläche 13.

Figur 2 zeigt schematisch in Querschnitt den erfindungsgemässen Federkörper angeordnet zwischen der äusseren Hülse 23 und dem Kernteil 21. Die einzelnen Windungen 3 stossen in den Berührungspunkten 5 an die Aussenhülse 23 und bilden insgesamt die äussere Mantelfläche 11 währenddem die inneren Berührungspunkte 7, anstossend an das Kernteil 21, die innere Mantelfläche 13 bilden.

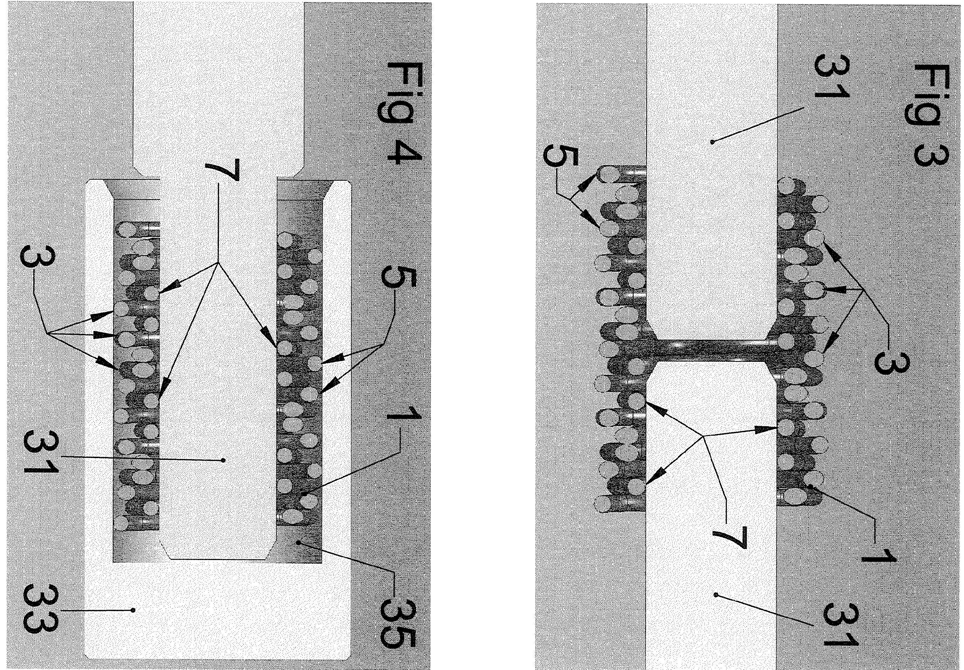

In den Figuren 3 und 4 sind wiederum schematisch im Längsschnitt zwei konkrete Ausführungsbeispiele dargestellt, und zwar im Falle von Figur 3 das Aneinanderstossen bzw. Verbinden zweier Achsen 31, welche im Verbindungsbereich mittels einem erfindungsgemässen Maschinenelement 1 zusammengehalten sind.

Figur 4 zeigt das Verbinden einer Endachse 31 in einer Aufnahmehülse 33 aufweisend eine Bohrungsöffnung 35.

Wiederum stossen die einzelnen Windungen des Maschinenelementes in den Berührungspunkten 5 an die aussen umliegende Hülse 33, währenddem die Windungen 3 in den Berührungspunkten 7 an das Achsende 31 anstossen.

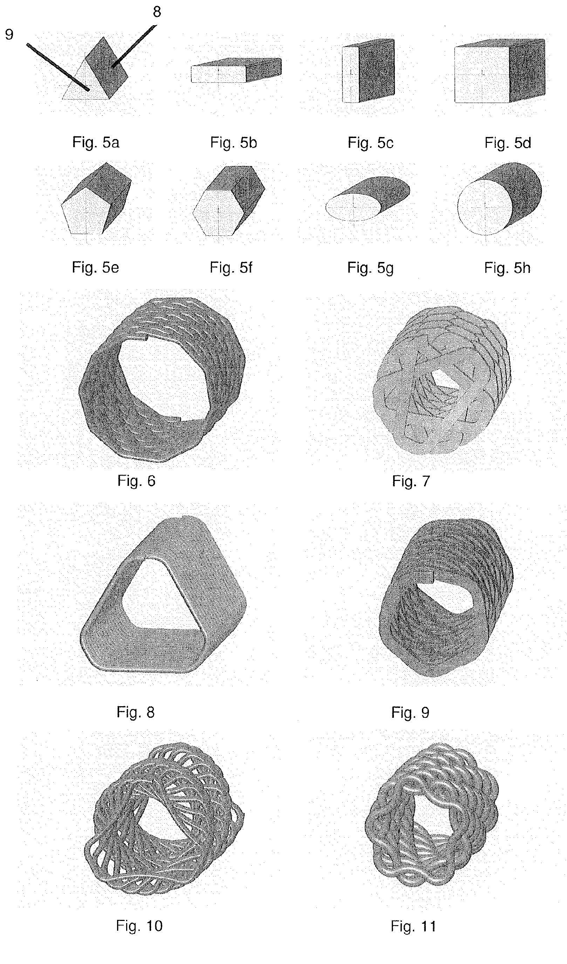

In den Figuren 5a bis 5h sind schematisch und in Perspektive Beispiele möglicher Querschnitte bzw. möglicher Profile des Drahtes dargestellt, welche zur Herstellung des erfindungsgemässen Maschinenelementes verwendet werden können. In Figur 5a weist der Draht 8 einen dreieckförmigen Querschnitt 9 auf. Gemäss den Figuren 5b und 5c ist der Querschnitt rechteckförmig, währenddem er gemäss Figur 5d quadratisch ist. Der Querschnitt kann aber auch 5-,6- oder mehreckig ausgebildet sein oder kreisrund, oval, etc. Gezeigt sind nur Beispiele und selbstverständlich sind auch andere Querschnitte bzw. Profile möglich.

In den Figuren 6 bis 11 sind mögliche Ausführungsvarianten des erfindungsgemässen Maschinenelementes dargestellt.

Dabei ist es möglich, dass die einzelnen Windungen in Längs- bzw. axialer Richtung aneinanderstossend ausgebildet sind oder leicht voneinander beabstandet. Die Windungen können zueinander verdreht oder einander kongruent überdeckend ausgebildet sein. Entsprechend zeigt beispielsweise Figur 8 dreieckförmig ausgebildete Windungen, welche in axialer Richtung zueinander kongruent ausgebildet sind. Demgegenüber sind die Windungen in axialer Richtung in den Beispielen 6 und 7 regelmässig verdreht ausgebildet, währenddem die Beispiele gemäss Figuren 9 und 10 eine spiralförmige Verdrehung aufweisen. Figur 11 schliesslich zeigt eine eher willkürliche gegenseitige Verdrehung der Windungen.

Je nach Auslegung kann sich das Element gegenüber einer Achse oder einer Bohrung bewegen, sowohl als Verdrehung als auch als radiale oder axiale Verschiebung oder als Kombination der drei Bewegungen. Das Element kann auch so ausgelegt sein, dass es als Ganzes fix ist gegenüber Achse oder Bohrung und eine Verschiebung nur durch die Verschiebung der einzelnen Drahtabschnitte gegeneinander durch elastische Veränderung der einzelnen Abschnitte zustande kommt. In axialer Richtung kann das Maschinenelement so ausgestaltet sein, dass die einzelnen Windungen mit einer beliebigen konstanten oder variablen Steigung ausgestaltet sind.

Bei der Verbindung von zwei Achsen oder Bohrungen gleicht das Maschinenelement Durchmesservariationen der Achsen oder Bohrungen aus und stellt so die kraftschlüssigen Verbindungen der Achsen oder Bohrungen mit dem Maschinenelement sicher.

Wiederum ist es möglich, dass das Maschinenelement so ausgestaltet ist, dass sich die innere und die äussere Mantelfläche des Elementes durch federnde Verschiebung der Drahtelemente relativ zueinander verschieben können. Die Verschiebung kann dabei sowohl in tangentialer-, radialeroder axialer Richtung erfolgen. Es können auch die Achsen der inneren und äusseren Mantelfläche relativ zueinander verschoben werden. Die Verschiebungen können auch kombiniert erfolgen.

Möglich ist auch, dass das Maschinenelement dergestalt ist, dass die Verschiebungen durch Federwirkungen des Drahtes reversibel sind.

Das Maschinenelement kann sich, aufgrund seiner kraftschlüssigen Verbindungen mit Bohrung und Achse bzw. mit den beiden Achsen bei kleiner Kraftwirkung gegenüber Bohrung und Achse, reversibel verschieben und sich bei genügend grosser Krafteinwirkung irreversibel verschieben.

Das Maschinenelement kann auch dergestalt sein, dass es mit entsprechend ausgestalteter Bohrungen und Welle in Umfangrichtung eine formschlüssige Verbindung eingehen kann. Die Ausgestaltung von Bohrung und Welle sind dabei vorzugsweise aber nicht ausschliesslich von polygonaler Form.

Bei den in den Figuren 1 bis 11 dargestellten Ausführungsvarianten handelt es sich selbstverständlich nur um Beispiele, um die vorliegende Erfindung näher zu erläutern. Sowohl die Wahl des Drahtquerschnittes bzw. Profils, wie auch die Ausgestaltung des Maschinenelementes selbst und die dargestellten Beispiele von Verwendungen können in x-beliebiger Art und Weise durch weitere Ausführungsvarianten ergänzt werden.

## Patentansprüche

1. Maschinenelement (1) aufweisend in einer zylindrischen Form verlaufende Drahtwindungen (3), **dadurch gekennzeichnet, dass** diese im Wesentlichen zwischen zwei Mantelflächen (11,13) verlaufend ausgebildet sind.

2. Maschinenelement nach Anspruch 1, **dadurch gekennzeichnet, dass** die Windungen (3) aus einem Profildraht bestehen, welche Windungen zu einer zylinderförmigen Form gewickelt sind, welche sich im Wesentlichen zwischen zwei voneinander in radialer Richtung beabstandeten Mantelflächen (11,13) erstrecken.

3. Maschinenelement nach einem der Ansprüche 1 oder 2, **dadurch gekennzeichnet, dass** der Draht zu einer zylindrischen Form mit den beiden Mantelflächen derart geformt ist, dass die Differenz zwischen dem Durchmesser der äusseren Mantelfläche und demjenigen der inneren Mantelfläche grösser ist als die doppelte radiale Querschnittsausdehnung des Profils bzw. des Drahtes.

4. Maschinenelement nach einem der Ansprüche 1 bis 3, **dadurch gekennzeichnet, dass** die Windungen derart geformt sind, dass der Draht abwechslungsweise auf der äusseren und inneren Mantelfläche zu liegen kommt, wobei der Draht nie die äussere und innere Mantelfläche gleichzeitig berührt.

5. Maschinenelement nach einem der Ansprüche 1 bis 4, **dadurch gekennzeichnet, dass** die Windungen bzw. der Draht die Mantelflächen jeweils nur für einen kurzen Abschnitt, das heisst maximal 1/2 einer ganzen Windungsumdrehung berührt.

6. Maschinenelement nach einem der Ansprüche 1 bis 5, **dadurch gekennzeichnet, dass** die Windungen in axialer Richtung einander kongruent überdeckend ausgebildet sind.

7. Maschinenelement nach einem der Ansprüche 1 bis 5, **dadurch gekennzeichnet, dass** die Windungen in axialer Richtung zueinander verdreht ausgebildet sind.

8. Maschinenelement nach einem der Ansprüche 1 bis 7, **dadurch gekennzeichnet, dass** die Windungen dreieckförmig, viereckförmig oder mehreckförmig ausgebildet sind.

9. Maschinenelement nach einem der Ansprüche 1 bis 5 oder 7 bis 8, **dadurch gekennzeichnet, dass** die Windungen in axialer Richtung zueinander spiralförmig verdreht ausgebildet sind.

10. Maschinenelement nach einem der Ansprüche 1 bis 9, **dadurch gekennzeichnet, dass** einzelne Windungen des Maschinenelementes Abschnitte aufweisen, welche die äussere und/oder innere Mantelfläche durchstossen.

11. Maschinenelement nach einem der Ansprüche 1 bis 10, **dadurch gekennzeichnet, dass** an mindestens einem Ende des Maschinenelementes die Mantelflächen konisch zusammenlaufend ausgebildet sind, vorgesehen beispielsweise um in ein Ende mit nicht verjüngter Mantelfläche einsteckbar zu sein.

12. Maschinenelement nach einem der Ansprüche 1 bis 11, **dadurch gekennzeichnet, dass** die Windungen aneinander anliegen und der Draht dieser Windungen sich axial berührt oder das Maschinenelement dergestalt ist, dass die Windungen nicht aneinander anliegen und der Draht dieser Windungen sich axial nicht berührt.

13. Maschinenelement nach einem der Ansprüche 1 bis 12, **dadurch gekennzeichnet, dass** der Draht für die einzelnen Windungen aus Eigen, Stahl, Kupfer, Aluminium, Titan und/oder einer Legierung davon, aus einem Polymermaterial wie insbesondere einem verstärkten polymeren Material bestehen kann.

14. Verwendung des Maschinenelementes nach einem der Ansprüche 1 bis 13, **dadurch gekennzeichnet, dass** es als Verbindungselement zwischen einer Achse und einer Bohrung oder zwischen zwei Achsen oder zwischen zwei Bohrungen dient.

15. Verwendung des Maschinenelementes als Federelement zwischen einer Achse und einer Bohrung.

16. Verwendung des Maschinenelementes nach einem der Ansprüche 1 bis 13 als elektrisches Verbindungselement zwischen einer Achse und einer Bohrung oder zwischen zwei Achsen, wobei die Verbindung sowohl fest als auch lösbar sein kann.

17. Verwendung nach einem der Ansprüche 14 bis 16, **dadurch gekennzeichnet, dass** das Maschinenelement dergestalt ist, dass es mit entsprechend ausgestalteter Bohrung oder Achse in axialer Richtung eine formschlüssige Verbindung eingehen kann, wobei Bohrung und Achse mit einem oder mehreren Einstichen bzw. Nuten versehen sein können, in welchem vom Maschinenelement vorstehende Bindungen einrasten können.
